Europäisches Patentamt

**European Patent Office**

Office européen des brevets

(11) Numéro de publication: **0 161 158**
**B1**

(12) ## FASCICULE DE BREVET EUROPEEN

(45) Date de publication du fascicule du brevet:
**05.07.89**

(51) Int. Cl.⁴: **G 01 B 11/14, A 63 B 67/12,**
**A 63 D 5/04**

(21) Numéro de dépôt: **85400671.5**

(22) Date de dépôt: **03.04.85**

(54) Instrument pour déterminer à distance le point gagnant au jeu de boules par perspective et médiatrice incorporée.

(30) Priorité: **10.04.84 FR 8406157**

(43) Date de publication de la demande:
**13.11.85 Bulletin 85/46**

(45) Mention de la délivrance du brevet:
**05.07.89 Bulletin 89/27**

(84) Etats contractants désignés:
**AT BE CH DE GB IT LI LU NL SE**

(56) Documents cités:
**FR-A- 1 260 045**
**FR-A- 1 339 494**
**FR-A- 2 506 621**

(73) Titulaire: **Florillo, Ciro, 25 rue Lépante, F-06000 Nice (FR)**
Titulaire: **Larrousse, Pierre, 27 avenue Cyrille Besset,**
**F-06800 Cagnes sur mer (FR)**

(72) Inventeur: **Levant, Jean-Claude, 9 avenue Saint Joseph,**
**F-06000 Nice (FR)**
Inventeur: **Florillo, Circo, 25 rue Lépante, F-06000 Nice**
**(FR)**
Inventeur: **Larrousse, Pierre, 27 avenue Cyrille Besset,**
**06800 Cagnes sur mer (FR)**

(74) Mandataire: **Hautier, Jean-Louis, OFFICE**
**MEDITERRANEEN DE BREVETS D'INVENTION 24 rue**
**Masséna, F-06000 Nice (FR)**

ACTORUM AG

## Description

La présente invention concerne un dispositif de visée qui permet de désigner, à distance, duquel de deux objets un troisième est le plus proche.

Aux jeux de boules, il indique la plus grande proximité du cochonnet par rapport à deux boules concurrentes et désigne de ce fait le «point» gagnant.

Cette détermination est traditionnellement acquise:
- soit par une évaluation subjective des joueurs, ce qui implique un risque d'erreur ou d'arbitrage,
- soit par une mesure effective, exacte, des distances respectives à l'aide d'un mètre,
- soit par comparaisons à l'aide d'un témoin, (ficelle ou autre objet servant de référence).

La nécessité de mesurer ou de comparer implique à son tour, outre une appréciable perte de temps et d'énergie, un risque de contacts donc de déplacements des objets dont on vérifie l'espacement.

Enfin, certaines personnes handicapées physiquement ne peuvent participer à cette phase du jeu pour des raisons bien compréhensibles.

Le dispositif selon l'invention permet de remédier à ces inconvénients.

Dans la pratique, il permet de matérialiser utilement, par effet de perspective, la médiatrice de deux points éloignés de l'utilisateur et d'exploiter les propriétés géométriques de cette médiatrice pour connaître duquel de ces deux points un troisième se trouve le plus proche.

Aux jeux de boules, les deux points ci-dessus sont les points de tangente, les plus proches du cochonnet, de deux boules concurrentes; le troisième point est le centre du couchonnet lui-même.

L'état de la technique peut être défini par les brevets suivants:
- FR-A 1 339 494: cette invention se caractérise par la matérialisation sur un appareil de visée de la médiatrice d'une droite ou la bissectrice d'un angle et de l'utilisation de cet appareil comme plan de projection d'une perspective visuelle. Sur l'appareil sont tracées la ligne MN et la médiatrice OP. L'utilisateur, placé au-dessus des deux boules, doit faire coïncider, dans sa visée, les deux points M et N avec les contours internes des sphères en rapprochant ou en éloignant l'appareil de son œil; dès que cette coïncidence est réalisée, sans bouger, d'un coup d'œil à travers l'autre branche du T, il situe immédiatement le centre du cochonnet et il peut en conclure quelle est la boule gagnante. Les deux branches du T peuvent être solidaires, mais une branche peut être articulée sur l'autre afin de réduire l'encombrement pendant la période de non utilisation.
- 1 260 045; l'appareil se compose d'une circonférence pouvant être métallique, de faible épaisseur, sur laquelle est tendu, par un fil, un diamètre aa' dont le centre peut être marqué par le croisement d'un deuxième diamètre rectangulaire avec le premier, soit bb'.

L'invention a pour objet un dispositif visée permettant de matérialiser, par effet de perspective, la médiatrice de deux boules concurrentes au jeu de la pétanque et d'interpréter la position du cochonnet par rapport à cette médiatrice pour désigner la boule éventuellement gagnante, comprenant un support rigide, plan, transparent sur lequel sont matérialisés des segments de droites parallèles et une médiatrice commune à ces segments. Ledit dispositif est caractérisé par un moyen de réglage qui assure la perpendicularité de la ligne de visée de l'œil par rapport à la médiatrice commune, et l'horizontalité des segments.

Le support présente en outre un segment parallèle à la médiatrice commune qui, lorsqu'il est occulté par cette médiatrice, assure la position de l'œil dans un plan vertical donné, par le support et la médiatrice commune.

Le moyen de réglage comprend une barre de trapèze qui, lorsqu'elle est occulté par la médiatrice assure l'horizontalité des segments.

Le fait de pouvoir occulter simultanément la vision du segment et de la barre de trapèze constitue un moyen qui place l'utilisateur dans les conditions nécessaires et suffisantes pour interpréter les propriétés connues de la médiatrice de deux points situés à distance du dispositif.

Le support peut être rapproché ou éloigné de sa vue par l'utilisateur debout, de telle sorte que l'un quelconque des segments se matérialise en perspective entre les deux points de tangente, côté cochonnet des deux boules à comparer et que le segment et la barre de trapèze étant occultés de la vision, le cochonnet apparaîtra, s'il n'est point équidistant des boules, dans l'un des deux plans séparés par la médiatrice, donc dans le plan où figure la boule gagnante.

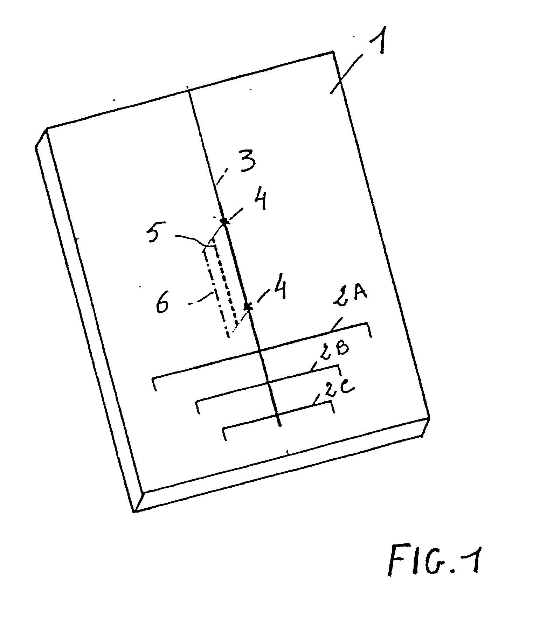

Représenté sur la figure 1 de l'invention, de profil et grandeur nature, le dispositif comporte un support plastique rectangulaire, plan, transparent et épais (1). – Sur le recto de ce support (1) et comme indiqué par la figure sont matérialisés trois segments de droite de longueur différentes (2A, 2B, 2C) et leur médiatrice commune (3).

Deux petits trous (4) sont percés à quelques centimètres d'intervalles dans la médiatrice.

Sur le verso de ce support (1), entre les deux trous (4) est matérialisé un segment de droite (5), de couleur contrastant avec celle de la médiatrice et présenté en pointillés sur la figure. Ce segment est au-dessous de la médiatrice (3) et parallèle à elle, mais s'en distingue en raison de l'épaisseur du support (1).

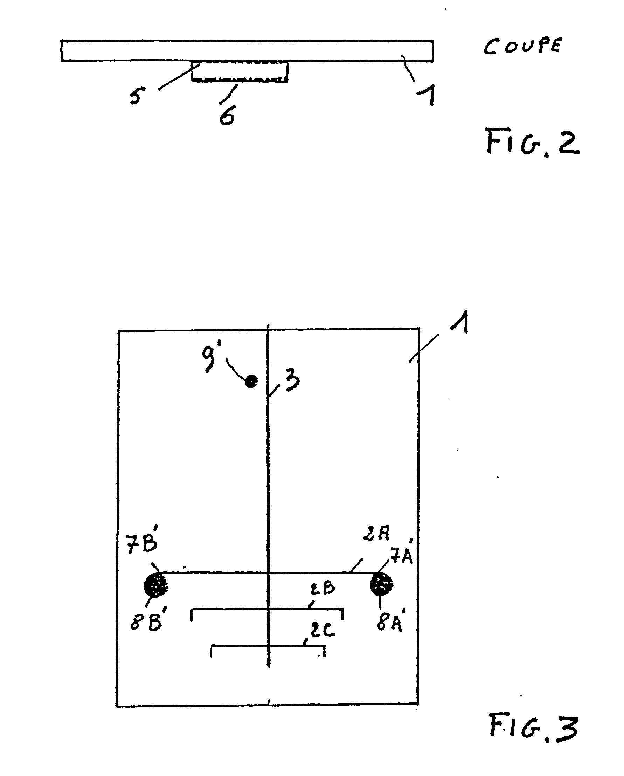

Enfin, côté verso, et comme indiqué sur la figure 2, en coupe, la barre d'un trapèze (6) suspendu librement sous la médiatrice et parallèlement à elle par un fil utilisant les trous (4), balance selon les lois de la gravité.

Cette barre de trapèze V(6) est indiquée sur la figure 1 en traitpoint; quoique solide, elle a la même largeur que la médiatrice (3) et le segment (5).

Selon une variante, le trapèze (6) pourrait être remplacé par une bulle-niveau d'usage courant dans le commerce.

Comme indiqué sur la figure 4, l'utilisateur debout doit se placer entre les deux boules concurrentes (8A, 8B), face au cochonnet (9). – Il place le dispositif manuellement de telle sorte à pouvoir observer boules (8A', 8B') et cochonnet (9') au travers du support transparent (I) et adapte ce dernier de façon à ce que l'un quelconque des segments (2A, 2B, 2C) réunisse du fait de la perspective les deux points de tangente (7A', 7B') de ces boules, côté cochonnet (9') – ce dernier apparaîtra alors (9'), s'il n'est point équidistant des boules, dans l'un des deux plans séparés par la médiatrice (3). – Ce plan sera celui où apparaît également la boule gagnante (en l'occurence sur la figure 4 la boule 8B).

Lors de l'utilisation, les segments (2A, 2B, 2C) doivent être tenus parallèlement au sol, l'œil de l'observateur se trouvant dans un plan vertical avec la médiatrice (3) – ces deux conditions sont réunies:
a) lorsque la médiatrice, au moment de la visée, masque totalement le segment (5) matérialisé au-dessous d'elle.
b) et lorsqu'elle masque également la barre du trapèze (6).

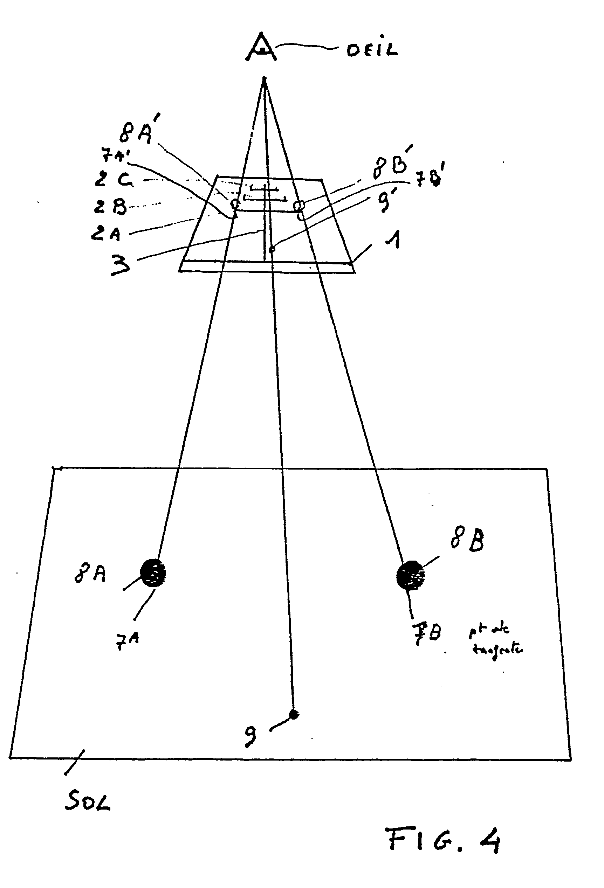

De telle sorte que seuls les dessins du recto du support (I) apparaissent à l'utilisateur comme indiqué sur la figure 3 de l'invention où nous supposons par ailleurs l'image de deux boules (8A', 8B') et d'un cochonnet (9') fictifs.

Le dispositif peut être réalisé en matière plastique en une opération de moulage par injection et addition manuelle du trapèze (6).

Il est tout particulièrement destiné au jeux de boules lorsqu'un joueur veut connaître laquelle des deux boules est la plus proche du cochonnet.

## Revendications

1. Dispositif de visée permettant de matérialiser, par effet de perspective, la médiatrice de deux boules concurrentes au jeu de la pétanque et d'interpréter la position du cochonnet par rapport à cette médiatrice pour désigner la boule éventuellement gagnante, comprenant un support (1) rigide, plan, transparent sur lequel sont matérialisés des segments (2A, 2B, 2C) de droites parallèles et une médiatrice (3) commune à ces segments, caractérisé par un moyen (5, 6) de réglage assurant la perpendicularité de la ligne de visée de l'œil par rapport à la médiatrice (3) commune, et l'horizontalité des segments.

2. Dispositif selon la revendication 1 caractérisé en ce que le support présente en outre un segment (5) parallèle à la médiatrice (3) commune qui, lorsqu'il est occulté par cette médiatrice (3), assure la position de l'œil dans un plan vertical formé par le support (I) et la médiatrice (3) commune.

3. Dispositif selon les revendications 1, 2 caractérisé en ce que le moyen de réglage comprend une barre de trapèze (6) qui, lorsqu'elle est occulté par la médiatrice (3), assure l'horizontalité des segments (2A, 2B, 2C).

4. Dispositif selon les revendications 2 et 3 caractérisé en ce que le fait de pouvoir occulter simultanément la vision du segment (5) et de la barre de trapèze (6) constitue un moyen qui place l'utilisateur dans les conditions nécessaires et suffisantes pour interpréter les propriétés connues de la médiatrice de deux points situés à distance du dispositif.

5. Dispositif selon la revendication 4 caractérisé en ce que le support (1) peut être rapproché ou éloigné de sa vue par l'utilisateur debout, de telle sorte que l'un quelconque des segments (2A, 2B, 2C) se matérialise en perspective entre les deux points de tangente (7A', 7B'), côté cochonnet (9) des deux boules (8A, 8B) à comparer et que le segment (5) et la barre de trapèze (6) étant occultés de la vision, le cochonnet (9) apparaîtra (9'), s'il n'est point équidistant des boules, dans l'un des deux plans séparés par la médiatrice (3), donc dans le plan où figure la boule gagnante.

## Patentansprüche

1. Zieleinrichtung zur Markierung der Mittellinie zweier konkurrierender Kugeln beim Pétanque-Spiel mittels der Perspektive und zur Festlegung der Position der Zielkugel in bezug auf die Mittellinie, um die gegebenenfalls gewinnende Kugel zu bezeichnen, mit einem starren, ebenen und durchsichtigen Träger (1), auf dem Strecken (2A, 2B, 2C), von parallelen Geraden und eine diesen Strecken gemeinsame Mittellinie (3) markiert sind, gekennzeichnet durch eine Einstelleinrichtung (5, 6), die sicherstellt, dass die optische Achse des Auges auf der gemeinsamen Mittellinie (3) und der Horizontalen der Strecken senkrecht steht.

2. Einrichtung gemäss Anspruch 1, dadurch gekennzeichnet, dass der Träger ferner eine zu der gemeinsamen Mittellinie (3) parallele Strecke (5) aufweist, die die Position des Auges in einer vertikalen, vom Träger (1) und von der gemeinsamen Mittellinie (3) gebildeten Ebene sicherstellt, wenn die Strecke (5) mit der Mittellinie (3) zur Deckung gebracht wird.

3. Einrichtung gemäss Anspruch 1 oder 2, dadurch gekennzeichnet, dass die Einstelleinrichtung eine trapezförmige Stange (6) aufweist, die die horizontale Lage der Strecken (2A, 2B, 2C) sicherstellt, wenn sie mit der Mittellinie (3) zur Deckung gebracht wird.

4. Einrichtung gemäss Anspruch 2 und 3, dadurch gekennzeichnet, dass die Tatsache, die beobachtete Strecke (5) und die beobachtete trapezförmige Stange (6) gleichzeitig zur Deckung bringen zu können, eine Einrichtung darstellt, mittels der der Benutzer in notwendige und hinreichende Bedingungen versetzt wird, um die bekannten Merkmale der Mittellinie für zwei in einem Abstand von der Einrichtung angeordnete Punkte festzulegen.

5. Einrichtung gemäss Anspruch 4, dadurch gekennzeichnet, dass der aufrechtstehende Benutzer den Träger (1) nahe bei oder entfernt von seinem Blickpunkt halten kann, so dass in der Perspektive eine der Strecken (2A, 2B, 2C) zwischen den zwei Punkten (7A', 7B') erscheint, die durch die Tangenten der zwei zu vergleichenden, auf der Seite der Zielkugel (9) sich befindenden Kugeln (8A, 8B) definiert sind, und dass, wenn die Strecke (5) und die trapezförmige Stange (6) für die Beobachtung zur Deckung gebracht sind, die Zielkugel (9), sofern sie nicht gleichen Abstand zu den zu vergleichenden Kugeln besitzt, in einer der zwei durch die Mittellinie (3) getrennten Ebenen, also in der Ebene, in der die gewinnende Kugel liegt, erscheint (9').

## Claims

1. Sighting means for marking the midline of two competing bowls in the French version of bowls, using the perspective, and for determining the position of the target bowl in relation to the midline in order to mark the bowl susceptible to win, comprising a rigid, plane and transparent support (1) on which segments (2A, 2B, 2C) of parallel straight lines and a joint midline (3) of these segments are marked, characterized by an adjusting means (5, 6) ensuring that the optical axis of the eye is perpendicular to the joint midline (3) and the horizontal plane of the segments.

2. The means according to claim 1, characterized in that the support furthermore comprises a segment (5) parallel to the joint midline (3), ensuring the position of the eye in a vertical plane defined by the support (1) and the joint midline when the segment (5) is brought to coincidence with the midline (3).

3. The means according to claim 1 or claim 2, characterized in that the adjusting means comprises a trapezoidal bar (6) ensuring the horizontal position of the segments (2A, 2B, 2C) when brought to coincidence with the midline (3).

4. The means according to claim 2 and claim 3, characterized in that the fact that the observed segment (5) and the observed trapezoidal bar (6) may be brought to coincidence simultaneously, constitutes a means for putting the user into necessary and sufficient conditions in order to determine the known features of the midline for two points located at a distance from said means.

5. The means according to claim 4, characterized in that the upright standing user may hold the support (1) close to, or remote from, his viewing point so that, in the perspective, one of the segments (2A, 2B, 2C) appears between the two points (7A', 7B') which are defined by the tangents of the two bowls (8A, 8B) to be compared and located on the side of the target bowl (9), and in that, when the segment (5) and the trapezoidal bar (6) are brought to coincidence for the observer, the target bowl (9), unless it possesses the same distance with respect to the bowls to be compared, appears in one of the two planes separated by the midline (3), and hence in the plane in which the winning bowl is lying (9').

FIG.1

COUPE

FIG. 2

FIG. 3

FIG. 4